# EUROPEAN PATENT APPLICATION

(11) **EP 4 481 091 A1**
(43) Date of publication of application: **25.12.2024**
(21) Application number: 23896092.6
(22) Date of filing: 01.08.2023
(51) Int. Cl.: D01F 2/02

(54) **IONIC LIQUID METHOD-BASED JUNCAO REGENERATED CELLULOSE FIBER AND PREPARATION METHOD THEREFOR**

(30) Priority: 30.11.2022 CN 202211540080
(71) Applicant: Xinxiang Chemical Fibre Co., Ltd., Xinxiang, Henan 453000 (CN)
(72) Inventor: XIE, Yueting, Xinxiang, Henan 453000 (CN); XING, Shanjing, Xinxiang, Henan 453000 (CN); SHAO, Changjin, Xinxiang, Henan 453000 (CN); YAO, Yongxin, Xinxiang, Henan 453000 (CN); ZHANG, Jiaqi, Xinxiang, Henan 453000 (CN); GUO, Fanxiu, Xinxiang, Henan 453000 (CN); GONG, Erhai, Xinxiang, Henan 453000 (CN); LI, Huien, Xinxiang, Henan 453000 (CN); CHEN, Xinwei, Xinxiang, Henan 453000 (CN); ZHAO, Xikun, Xinxiang, Henan 453000 (CN); LI, Ming, Xinxiang, Henan 453000 (CN)
(74) Representative: Gunzelmann, Rainer
(86) International application number: PCT/CN2023/110468
(87) International publication number: WO 2024/113929

(57) **Abstract**

The present invention belongs to the field of chemical textiles, and particularly relates to an ionic liquid method-based Juncao regenerated cellulose fiber and a preparation method therefor. The preparation method comprises: adding an ionic liquid and nickel chloride into a Juncao pulp; uniformly mixing same to obtain a mixture; and subjecting the mixture to swelling, dissolving, defoaming and dry-jet wet spinning formation and then drying same to obtain Juncao regenerated cellulose fibers. The present invention adds a catalyst, i.e. nickel chloride, during the process of dissolving cellulose in the ionic liquid so as to reduce the viscosity of the Juncao cellulose solution, and selects a mixed aqueous solution of ethanol and glycerol as a coagulation bath for the dry jet wet spinning formation process so as to improve the dry elongation property of the Juncao cellulose fibers. The present invention optimizes the existing preparation processes for an ionic liquid method-based cellulose fiber, and provides the ionic liquid method-based preparation method suitable for a Juncao cellulose fiber.

## Description

The present application claims the priority to Chinese Patent Application No. CN202211540080.0, titled "IONIC LIQUID METHOD-BASED JUNCAO REGENERATED CELLULOSE FIBER AND PREPARATION METHOD THEREOF", filed with China National Intellectual Property Administration (CNIPA) on November 30, 2022, which is incorporated herein by reference in its entirety.

### TECHNICAL FIELD

The present disclosure belongs to the field of chemical textiles, and specifically relates to an ionic liquid method-based Juncao regenerated cellulose fiber and a preparation method thereof.

### BACKGROUND

Cellulose has a high degree of crystallinity and a large number of hydrogen bonds between and within molecules, making the cellulose difficult to dissolve and melt-spin. In recent years, the solvent-based Lyocell spinning process represented by NMMO and the ionic liquid method-based cellulose fiber spinning process have been developed for the dissolution and spinning of cellulose. Ionic liquids are a type of green solvent with great application prospects. Research on the dissolution, regeneration, and derivatization of cellulose in the ionic liquids has become one of the hot technologies in fiber material processing. Cellulose pulp in existing technologies mainly comes from wood, cotton, and bamboo pulps, and the shortage of existing natural cellulose fiber resources has become an urgent problem facing the textile industry. If the abundant resources of Juncao pulp are used to replace traditional wood pulp and cotton pulp, the production of regenerated cellulose fiber in the textile field can be greatly improved, and Juncao can also be used in a high-value manner.

CN109898169A has disclosed an ionic liquid method-based regenerated cellulose fiber and a preparation method thereof, where an ionic liquid is added to swell, dissolve, and defoam a cellulose pulp, and a raw cellulose fiber is obtained by drying after conducting dry-jet wet spinning formation. In the above process, the ionic liquid directly dissolves the Juncao pulp to obtain a gel solution with high viscosity, making it difficult to conduct filtration, transportation, and air bubble removal on the gel solution during the production. The Juncao cellulose pulp needs to be depolymerized in the early stage of dissolution. Therefore, it is particularly important to develop a preparation method of an ionic liquid method-based Juncao cellulose fiber.

### SUMMARY

In view of the problems and shortcomings in the prior art, an objective of the present disclosure is to provide an ionic liquid method-based Juncao regenerated cellulose fiber and a preparation method thereof.

In order to achieve the above objective of the present disclosure, the present disclosure adopts the following technical solutions:
A first aspect of the present disclosure provides a preparation method of an ionic liquid method-based Juncao regenerated cellulose fiber, including: adding an ionic liquid and nickel chloride into a Juncao pulp, uniformly mixing by stirring to obtain a mixture, and subjecting the mixture to swelling, dissolving, defoaming, and dry-jet wet spinning formation, and then drying to obtain the Juncao regenerated cellulose fiber.

Preferably, the nickel chloride is added at 0.001 ppm to 1.0 ppm and the ionic liquid accounts for 45% to 99% of a total mass of the mixture calculated on the basis of a dry Juncao pulp.

Preferably, a coagulation bath used in the dry-jet wet spinning formation includes ethanol, glycerol, and water.

Preferably, the ethanol has a concentration of 25 g/L to 60 g/L and the glycerol has a concentration of 1.0 g/L to 10.0 g/L in the coagulation bath, and the coagulation bath is at 40°C to 80°C.

Preferably, the ionic liquid is an imidazolium-based ionic liquid.

Preferably, cations of the imidazolium-based ionic liquid are selected from the group consisting of 1-ethyl-3-methylimidazole, 1-allyl-3-methylimidazole, *N*-methylimidazole, and 1-butyl-3-methylimidazole cations; and anions of the imidazolium-based ionic liquid are selected from the group consisting of AlCl₃⁻, BrCl₃⁻, BrI₂⁻, AlB₄r⁻, FHF⁻, BF₄⁻, PF₆⁻, CF₃SO₃⁻, SbF₆⁻, Ac⁻, and phosphate anions.

Preferably, the swelling is conducted for 0.5 h to 48 h.

Preferably, the dissolving is conducted at 60°C to 120°C for 10 h to 24 h.

A second aspect of the present disclosure provides a Juncao regenerated cellulose fiber prepared by the preparation method in the first aspect.

Compared with the prior art, the present disclosure has the following beneficial effects:
(1) In the present disclosure, a catalyst nickel chloride is added during dissolving the Juncao pulp with the ionic liquid. The nickel chloride can depolymerize the cellulose solution, thereby reducing viscosity, facilitating subsequent filtration, transportation, and defoaming, and then improving a performance of the fiber product.
(2) In the present disclosure, the preparation method has the advantages of a low dosage of nickel chloride catalyst used and a low cost, and is suitable for production and application by textile enterprises.
(3) In the present disclosure, a coagulation bath used in the dry-jet wet spinning formation is a mixed aqueous solution of ethanol and glycerol, which can not only remove the ionic liquid on the surface of filaments, but also improve a dry stretching performance of the Juncao regenerated cellulose fiber.
(4) In the present disclosure, the preparation method optimizes the existing ionic liquid method for preparing regenerated cellulose fibers, and provides an ionic liquid method-based preparation process suitable for the Juncao regenerated cellulose fiber.

### DETAILED DESCRIPTION OF THE EMBODIMENTS

To provide clearer understanding of the technical solutions of the present disclosure for those skilled in the art, the technical solutions in the present disclosure will be described in detail below in conjunction with specific examples.

### Example 1

A preparation method of an ionic liquid method-based Juncao regenerated cellulose fiber included the following steps:
(1) swelling: a crushed Juncao pulp was mixed with an ionic liquid and 0.20 ppm of nickel chloride was added thereto to obtain a mixture, which was stirred to allow swelling at a room temperature for 5 h, where the ionic liquid accounted for 50% of a total mass of the mixture; and
   the ionic liquid in this example included 1-ethyl-3-methylimidazole (EMIM) cations and phosphate (DEP) ions;
(2) dissolving: the mixture was heated to 60°C within 1 h under mechanical stirring, and dissolved for 10 h to form a viscous gel solution;
(3) defoaming: the gel solution was subjected to vacuum defoaming for 20 h to remove air bubbles in the gel solution;
(4) dry-jet wet spinning formation: an obtained spinning dope was subjected to dry jet wet spinning formation in a coagulation bath at 25°C to obtain the Juncao regenerated cellulose fiber in an initial state; where
   the coagulation bath was a mixed aqueous solution of ethanol and glycerol, the ethanol had a concentration of 25.0 g/L and the glycerol had a concentration of 3.0 g/L;
(5) washing and drying: the Juncao regenerated cellulose fiber in an initial state was washed with deionized water at 20°C to 60°C 1 to 3 times to remove the ionic liquid carried on the fiber, and then dried at 100°C; and
(6) finished product preparation: a resulting dried fiber was wound into a tube or cut and packaged to obtain the finished product fiber.

### Example 2

A preparation method of an ionic liquid method-based Juncao regenerated cellulose fiber included the following steps:
(1) swelling: a crushed Juncao pulp was mixed with an ionic liquid and 0.55 ppm of nickel chloride was added thereto to obtain a mixture, which was stirred to allow swelling at a room temperature for 12 h, where the ionic liquid accounted for 50% of a total mass of the mixture; and
   the ionic liquid in this example included 1-allyl-3-methylimidazole (AMIM) cations and AlCl₃⁻ anions;
(2) dissolving: the mixture was heated to 120°C within 1 h under mechanical stirring, and dissolved for 12 h to form a viscous gel solution;
(3) defoaming: the gel solution was subjected to vacuum defoaming for 24 h to remove air bubbles in the gel solution;
(4) dry-jet wet spinning formation: an obtained spinning dope was subjected to dry jet wet spinning formation in a coagulation bath at 75°C to obtain the Juncao regenerated cellulose fiber in an initial state; where
   the coagulation bath was a mixed aqueous solution of ethanol and glycerol, the ethanol had a concentration of 30.0 g/L and the glycerol had a concentration of 5.0 g/L;
(5) washing and drying: the Juncao regenerated cellulose fiber in an initial state was washed with deionized water at 20°C to 60°C 1 to 3 times to remove the ionic liquid carried on the fiber, and then dried at 130°C; and
(6) finished product preparation: a resulting dried fiber was wound into a tube or cut and packaged to obtain the finished product fiber.

### Example 3

A preparation method of an ionic liquid method-based Juncao regenerated cellulose fiber included the following steps:
(1) swelling: a crushed Juncao pulp was mixed with an ionic liquid and 0.60 ppm of nickel chloride was added thereto to obtain a mixture, which was stirred to allow swelling at a room temperature for 10 h, where the ionic liquid accounted for 50% of a total mass of the mixture; and
   the ionic liquid in this example included N-methylimidazole (HMIM) cations, 1-butyl-3-methylimidazole (BMIM) cations, and CF₃SO₃⁻ anions;
(2) dissolving: the mixture was heated to 60°C within 1 h under mechanical stirring, and dissolved for 10 h to form a viscous gel solution;
(3) defoaming: the gel solution was subjected to vacuum defoaming for 20 h to remove air bubbles in the gel solution;
(4) dry-jet wet spinning formation: an obtained spinning dope was subjected to dry jet wet spinning formation in a coagulation bath at 75°C to obtain the Juncao regenerated cellulose fiber in an initial state; where
   the coagulation bath was a mixed aqueous solution of ethanol and glycerol, the ethanol had a concentration of 35.0 g/L and the glycerol had a concentration of 6.0 g/L;
(5) washing and drying: the Juncao regenerated cellulose fiber in an initial state was washed with deionized water at 20°C to 60°C 1 to 3 times to remove the ionic liquid carried on the fiber, and then dried at 80°C; and
(6) finished product preparation: a resulting dried fiber was wound into a tube or cut and packaged to obtain the finished product fiber.

### Comparative Example 1

A preparation method of an ionic liquid method-based Juncao regenerated cellulose fiber in Comparative Example 1 was substantially the same as that in Example 1, 2 or 3, except that the nickel chloride was not added during the swelling.

### Comparative Example 2

A preparation method of an ionic liquid method-based Juncao regenerated cellulose fiber in Comparative Example 2 was substantially the same as that in Example 2, except that the coagulation bath in the dry-jet wet spinning formation in step (4) included an ethanol aqueous solution, where the ethanol had a concentration of 25.0 g/L.

### Effect Comparison Test

To illustrate the effects of the present disclosure, Table 1 showed a performance comparison of the products in Examples 1 to 3 and Comparative Examples 1 to 2.

**Table 1 Performance comparison of Juncao cellulose fiber products in each group**

| Group | Dry breaking strength (CN/dtex) | Dry elongation at break (%) |
|---|---|---|
| Example 1 | 3.65 | 6.68 |
| Example 2 | 3.58 | 6.47 |
| Example 3 | 3.43 | 5.98 |
| Comparative Example 1 | 3.19 | 5.73 |
| Comparative Example 2 | 3.04 | 5.44 |

From the performance indicators of the Juncao regenerated cellulose fibers obtained in Examples 1, 2, and 3 and Comparative Example 1, it was seen that the Juncao regenerated cellulose fiber products prepared after adding nickel chloride during the swelling had better performance. This was because there was a relatively high viscosity of the gel obtained by directly dissolving the Juncao pulp with ionic liquid, which not only made it difficult to filter and transport, but also increased the difficulty of defoaming. The nickel chloride catalyst added in the swelling stage could depolymerize the cellulose solution, thereby reducing viscosity. Therefore, the obtained Juncao regenerated cellulose fiber product had a better performance. Compared with Comparative Example 2, after adding glycerol to the ethanol aqueous solution in the coagulation bath, the dry stretching performance of the Juncao fiber product could be improved while removing the ionic liquid on the surface of the spinning filaments.

The above examples are specific implementations of the present disclosure, but the implementation of the present disclosure is not limited by the above examples. Any other combinations, changes, modifications, substitutions, and simplifications that do not exceed the design idea of the present disclosure shall fall within the protection scope of the present disclosure.

## Claims

1. A preparation method of an ionic liquid method-based Juncao regenerated cellulose fiber, comprising: adding an ionic liquid and nickel chloride into a Juncao pulp, uniformly mixing to obtain a mixture, and subjecting the mixture to swelling, dissolving, defoaming, and dry-jet wet spinning formation, and then drying to obtain the Juncao regenerated cellulose fiber.

2. The preparation method according to claim 1, wherein the nickel chloride is added at 0.001 ppm to 1.0 ppm and the ionic liquid accounts for 45% to 99% of a total mass of the mixture calculated on the basis of a dry Juncao pulp.

3. The preparation method according to claim 2, wherein the dry-jet wet spinning formation is conducted in a coagulation bath, and the coagulation bath is a mixed aqueous solution of ethanol and glycerol.

4. The preparation method according to claim 3, wherein the ethanol has a concentration of 25 g/L to 60 g/L and the glycerol has a concentration of 1.0 g/L to 10.0 g/L in the coagulation bath.

5. The preparation method according to claim 2 or 4, wherein the coagulation bath is at 40°C to 80°C.

6. The preparation method according to claim 1 or 2, wherein the ionic liquid is an imidazolium-based ionic liquid.

7. The preparation method according to claim 6, wherein cations of the imidazolium-based ionic liquid are selected from the group consisting of 1-ethyl-3-methylimidazole, 1-allyl-3-methylimidazole, N-methylimidazole, and 1-butyl-3-methylimidazole cations; and anions of the imidazolium-based ionic liquid are selected from the group consisting of AlCl₃⁻, BrCl₃⁻, BrI₂⁻, AlBr₄⁻, FHF⁻, BF₄⁻, PF₆⁻, CF₃SO₃⁻, SbF₆⁻, Ac⁻, and phosphate anions.

8. The preparation method according to claim 1, wherein the swelling is conducted for 0.5 h to 48 h, and the dissolving is conducted at 60°C to 120°C for 10 h to 24 h.

9. The preparation method according to claim 1, wherein the defoaming is vacuum defoaming.

10. The preparation method according to claim 1, wherein washing is conducted after the dry-jet wet spinning formation and before the drying.

11. The preparation method according to claim 10, wherein the washing is conducted 1 to 3 times with deionized water at 20°C to 60°C.

12. A Juncao regenerated cellulose fiber prepared by the preparation method according to any one of claims 1 to 11.
